# EUROPÄISCHE PATENTANMELDUNG

(11) **EP 1 505 701 A1**
(43) Veröffentlichungstag der Anmeldung: **09.02.2005**
(21) Anmeldenummer: 04016669.6
(22) Anmeldetag: 15.07.2004
(51) Int. Cl.: H02B 1/21

(54) **Auf Stromschienen anzuordnendes elektrischesTeil**

(30) Priorität: 02.08.2003 DE 10335496
(71) Anmelder: ABB PATENT GmbH, 68526 Ladenburg (DE)
(72) Erfinder: Majewski, Joachim, 69221 Dossenheim (DE); Muders, Erwin, 69126 Heidelberg (DE)
(74) Vertreter: Miller, Toivo

(57) **Zusammenfassung**

Auf Stromschienen (1,2), einer elektrischen Einrichtung, insbesondere eines Verteilers, anzuordnendes Teil (10), insbesondere Installationsschaltgerät oder Zwischenteil zum Anordnen eines Installationsschaltgerätes auf den Stromschienen (1,2) eines Verteilers, mit einer Befestigungsseite (14) und einer Geräteseite (16), und mit wenigstens einem an der Befestigungsseite (14) befindlichen ersten Befestigungselement, das wenigstens eine Raste zur Befestigung des Teils auf einer Stromschiene (1,2) einfacher oder mehrfacher, insbesondere doppelter Dicke, aufweist, dadurch gekennzeichnet, dass das erste Befestigungselement (20) eine erste Raste (22) im Abstand einer mehrfachen, insbesondere doppelten Stromschienendicke und eine zweite Raste (24) im Abstand einer einfachen Stromschienendicke umfasst, die zweite Raste (24) so an dem ersten Befestigungselement (20) angebracht ist, dass sie bei Anordnung auf einer Stromschiene (2) von mehrfacher, insbesondere doppelter Dicke durch die Stromschiene (2) zurückgedrückt wird, während die erste Raste (22) dann die Stromschiene (2) haltend hintergreift, und beide Rasten (22,24) sich durch einen von der Gerätefrontseite (63,64) in Einbauposition her manuell betätigbaren Hebel (26) zurückdrücken lassen.

## Beschreibung

Die Erfindung betrifft ein auf Trägerelementen, insbesondere Stromschienen oder Normprofilschienen, einer elektrischen Einrichtung, insbesondere eines Verteilers, anzuordnendes Teil, insbesondere ein Installationsschaltgerät oder ein Zwischenteil zum Anordnen eines Installationsschaltgerätes, beispielsweise eines Sicherungshauptschalters, auf den Stromschienen eines Verteilers, mit wenigstens einem hinter eine der Stromschienen greifenden ersten Befestigungselement an seiner Befestigungsseite, gemäß dem Oberbegriff des Anspruchs 1.

Ein solches Teil ist beispielsweise aus der DE 202 09 246 bekannt. Das dort offenbarte Zwischenteil zum Anordnen eines Installationsschaltgerätes auf Stromschienen oder Profilschienen in einem Verteiler wird mittels einer Schnellbefestigungsvorrichtung auf einer Stromschiene gehalten, die nur unter Zuhilfenahme eines Werkzeuges wieder gelöst werden kann. Des weiteren muß dieses Zwischenteil umgerüstet werden, wenn es anstatt auf einer Stromschiene einfacher Dicke auf einer Stromschiene mit doppelter Dicke montiert werden soll. Dann müssen nämlich an der Schnellbefestigungsvorrichtung eine Raste von einer ersten in eine zweite Führungsnut umgesteckt und an einem zweiten, angeformten Befestigungsteil ein Haken irreversibel weggebrochen werden. Wurde das Teil solcherart einmal an einer Stromschiene doppelter Dicke montiert, kann es dann nicht mehr zur Montage an einer Stromschiene einfacher Dicke verwendet werden.

Es ist daher die Aufgabe der vorliegenden Erfindung, ein gattungsgemäßes Teil zu schaffen, dessen Anbringen auf Stromschienen oder Profilschienen stark vereinfacht und ohne Werkzeug möglich ist, und das abwechselnd und mehrfach, auf einfache Weise und ohne Umbau, auf Stromschienen einfacher oder mehrfacher, insbesondere doppelter Dicke befestigt werden kann.

Die Aufgabe wird erfindungsgemäß gelöst durch die kennzeichnenden Merkmale des Anspruchs 1.

Erfindungsgemäß also ist das erste Befestigungselement mit zwei in zwei Stufen angeordneten Halteteilen versehen, derart, dass zweite Halteteil zurückdrückbar ist und durch das Zurückdrücken des zweiten und Benutzen des ersten Halteteils eine Anpassung an eine Stromschiene von mehrfacher, insbesondere doppelter Dicke möglich wird. Beide Halteteile zusammen lassen sich durch einen von der Gerätefrontseite her manuell betätigbaren Hebel zurückdrücken.

In einer besonders vorteilhaften Ausgestaltungsform der Erfindung ist das erste Halteteil eine Raste, die von der Befestigungsseite des Teils einen Abstand einer mehrfachen, insbesondere doppelten Stromschienendicke aufweist, und das zweite Halteteil ist eine Raste, die von der Befestigungsseite des Teils einen Abstand einer einfachen Stromschienendicke aufweist.

Der Vorteil der erfindungsgemäßen Lösung liegt darin, dass mit den beiden Rasten, die in unterschiedlichem Abstand von der Befestigungsseite des Teils an dem ersten Befestigungselement angebracht sind, nämlich die erste Raste im Abstand einer einfachen Stromschienendicke und die zweite Raste im Abstand einer mehrfachen, insbesondere doppelten Stromschienendicke, wahlweise eine Befestigung auf entweder einer Stromschiene einfacher oder doppelter Dicke möglich ist, ohne die Notwendigkeit irgend eines Umbaus. Die zweite Raste ist so angebracht, dass sie bei Montage auf einer Stromschiene doppelter Dicke zwar zurückgedrückt wird, aber sie muß nicht entfernt werden. Nachfolgend ist wieder eine Montage auf einer Stromschiene einfacher Dicke möglich. Bei Montage auf einer Stromschiene doppelter Dicke erfolgt das Verrasten also mit der ersten Raste, und bei Montage auf einer Stromschiene einfacher Dicke erfolgt die Verrastung mittels der zweiten Raste.

Um das Teil von den Stromschienen zu entfernen, wird kein Werkzeug benötigt, denn beide Rasten lassen sich erfindungsgemäß durch einen Hebel von der Frontseite her manuell, also ohne Werkzeug, zurückdrücken, d.h., von den Stromschienen so weit wegdrücken, dass das Teil entrastet und von den Stromschienen einfach abgezogen werden kann.

Insbesondere vorteilhaft ist, dass mit der erfindungsgemäßen Anordnung ein Teil, das sich in einer Aneinanderreihung mehrerer Teile auf Stromschienen oder Profilschienen in einer elektrischen Verteilanlage, beispielsweise einem Verteilerkasten, befindet, herausnehmen oder einsetzen und verrasten lässt, ohne dass die anderen, insbesondere benachbarte Teile zuvor entfernt werden müssten. Dies bietet bei der Montage und insbesondere bei der nachträglichen Wartung solcher elektrischer Verteilanlagen eine sehr große Vereinfachung und damit Zeit- und Kostenersparnis für den Installateur.

Gemäß einer weiteren vorteilhaften Ausgestaltung der Erfindung ist an der Ober- oder Unterseite des Teils ein zweites Befestigungselement angebracht mit wenigstens zwei in zwei Stufen angeordneten Haken, derart, dass der zweite Haken zurückdrückbar ist und durch das Zurückdrücken des zweiten und Benutzen des ersten Hakens eine Anpassung an eine Stromschiene von mehrfacher, insbesondere doppelter Dicke möglich wird. Vorteilhafterweise weist der erste Haken von der Befestigungsseite des Teils einen Abstand einer mehrfachen, insbesondere doppelten Stromschienendicke, und der zweite Haken von der Befestigungsseite des Teils einen Abstand einer einfachen Stromschienendicke auf. Bei Anordnung auf einer Stromschiene von mehrfacher, insbesondere doppelter Dicke wird dann erfindungsgemäß der zweite Haken durch die Stromschiene zurückgedrückt, während der erste Haken dann die Stromschiene haltend hintergreift.

In weiterer vorteilhafter Ausgestaltung sind ein erster Haken und zwei zweite Haken vorgesehen.

Diese erfindungsgemäße bevorzugte Ausgestaltung schafft in sehr vorteilhafter Weise eine zusätzliche zweite Befestigungsmöglichkeit auf Stromschienen in Ergänzung zu dem erfindungsgemäßen ersten Befestigungselement. Das Teil kann mit den Haken des zweiten Befestigungselements beispielsweise an der obersten Stromschiene des Verteilerkastens, oft handelt es sich dabei um die Nulleiter-Schiene, eingehängt und ohne großen Kraftaufwand seitlich noch verschoben werden, bis die endgültige Einbauposition erreicht ist. Dann erst erfolgt das Verrasten mit den Rasten des ersten Befestigungselementes. Wenn die oberste Stromschiene ein doppelt breite Schiene ist, erfolgt das Einhängen an dem ersten Haken; der zweite Haken wird in diesem Fall ohne großen Kraftaufwand von der Stromschiene zurückgedrückt. Wenn die oberste Stromschiene eine Schiene von einfacher Breite ist, erfolgt das Einhängen an dem zweiten Haken.

Weitere vorteilhafte Ausgestaltungen und Verbesserungen der Erfindung und weitere Vorteile sind den Unteransprüchen zu entnehmen.

Anhand der Zeichnungen, in denen drei Ausführungsbeispiele der Erfindung dargestellt sind, sollen die Erfindung sowie weitere vorteilhafte Ausgestaltungen und Verbesserungen der Erfindung und weitere Vorteile näher erläutert und beschrieben werden.

Es zeigen:
- Fig. 1: eine erste Ausführungsform eines erfindungsgemäßen Teils und des ersten Befestigungselements, in perspektivischer Ansicht, wobei das erste Befestigungselement getrennt von dem Teil dargestellt ist,
- Fig. 2: das Teil nach Fig. 1 zusammen mit dem ersten Befestigungselement,
- Fig. 3: eine zweite Ausführungsform eines erfindungsgemäßen Teils und des ersten Befestigungselements, in perspektivischer Ansicht, wobei das erste Befestigungselement getrennt von dem Teil dargestellt ist,
- Fig. 4: das Teil nach Fig. 2 zusammen mit dem ersten Befestigungselement,
- Fig. 5: eine Querschnittsansicht des Teils gemäß der ersten Ausführungsform, mit erstem Befestigungselement, montiert auf und verrastet mit Stromschienen,
- Fig. 6: eine Querschnittsansicht des Teils gemäß der ersten Ausführungsform, mit erstem Befestigungselement in zurückgedrückter Position, montiert auf Stromschienen,
- Fig. 7: eine Querschnittsansicht des Teils gemäß der zweiten Ausführungsform, mit erstem Befestigungselement, montiert auf und verrastet mit Stromschienen, und
- Fig. 8: eine Querschnittsansicht einer dritten Ausführungsform des erfindungsgemäßen Teils, montiert auf und verrastet mit Stromschienen.

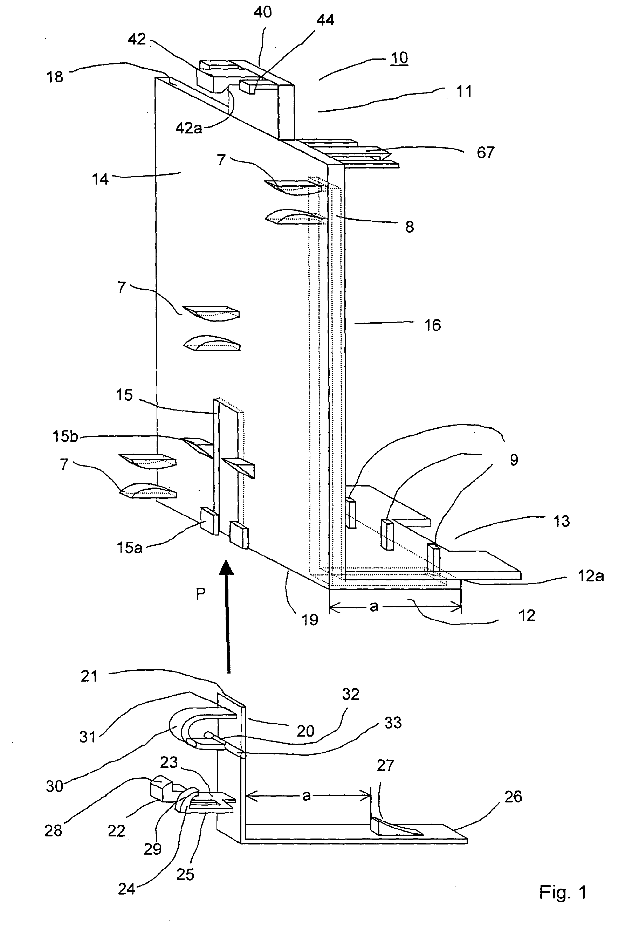

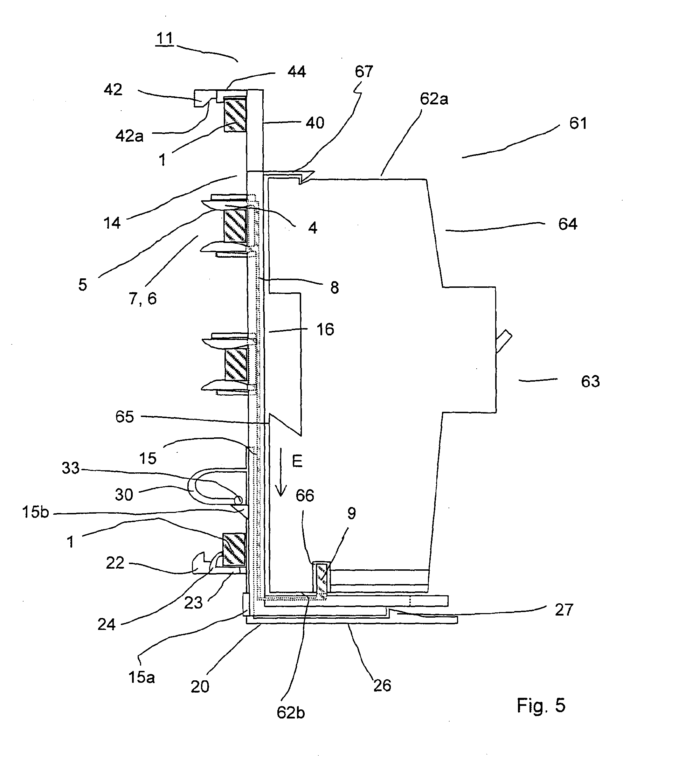

Fig 1 zeigt in perspektivischer Ansicht ein erfindungsgemäßes Teils 10 mit einem ersten Befestigungselement 20, und zwar in der Ausführungsform als Zwischenteil 11 zum Anordnen eines Installationsschaltgerätes auf den Stromschienen eines Verteilers, hier eines dreipoligen Installationsschaltgerätes. Der besseren Übersichtlichkeit wegen sind in Fig. 1 das Installationsschaltgerät und die Stromschienen nicht dargestellt. Für die Darstellung eines mittels des Zwischenteils 11 auf Stromschienen eines Verteilers angeordneten Installationsschaltgerätes wird auf die Fig. 5 bis 7 verwiesen. Gleiche Bezugszeichen in allen hier gezeigten Figuren bezeichnen dabei gleiche oder gleichwirkende Teile.

Das Zwischenteil 11 hat im wesentlichen die Form einer rechteckigen ersten Platte mit einem an einer ihrer Schmalseiten angeformten Sitz 12 zur Aufnahme eines Installationsschaltgerätes 61, beispielsweise eines Sicherungshauptschalters. Ein solches Installationsschaltgerät in Verbindung mit dem Zwischenteil ist in den Fig. 5 bis 7 dargestellt. Es weist eine vordere Gerätefrontseite 63, eine hintere Gerätefrontseite 64, eine - in montierter Lage - obere Geräteschmalseite 62a und eine untere Geräteschmalseite 62b, sowie eine Gerätebefestigungsseite 65 auf.

Diejenige Schmalseite des Zwischenteils 11, an der der Sitz 12 angeformt ist, wird, weil in montierter Lage unten befindlich, im Folgenden als untere Schmalseite 19 bezeichnet, die gegenüberliegende Schmalseite als obere Schmalseite 18. Der Sitz 12 ist im wesentlichen durch eine zweite Platte gebildet, die rechtwinklig an der ersten Platte angebracht ist. Im vorliegenden Beispiel ist das Zwischenteil mit dem Sitz ein Kunststoff-Spritzgussteil, der Sitz ist somit an die erste Platte angeformt. Es könnte sich bei der ersten und zweiten Platte allerdings auch um getrennte Teile aus Kunststoff oder einem anderen Isolierstoff handeln, die nachträglich zusammengefügt wurden, beispielsweise durch Verrasten, Verschrauben oder Verschweißen.

Der Sitz 12 weist gegenüber der ersten Platte etwa mittig eine Ausnehmung 13 auf und an seiner Unterseite im Abstand a von der ersten Platte eine Raststufe 12a.

Diejenige Breitseite des Zwischenteils 11, an der der Sitz 12 angebracht ist, wird im Folgenden als Geräteseite 16 bezeichnet, die andere Breitseite wird als Befestigungsseite 14 bezeichnet.

An der oberen Schmalseite 18 ist an dem Zwischenteil11 mindestens ein etwa senkrecht aus der Geräteseite 16 herausragender Haltehaken 67 angebracht, derart, dass der Haltehaken 67 ein Installationsschaltgerät 61, das in das Zwischenteil 11 aufgenommen ist, an dessen oberer Schmalseite 62 lösbar festhält.

An der oberen Schmalseite 18 ist an dem Zwischenteil 11 weiterhin ein Befestigungselement 40 angebracht, hier zweites Befestigungselement 40 genannt. Es besteht im Wesentlichen aus einer Platte aus demselben Material wie das Zwischenteil 11 und der Sitz 12 und trägt mittig und senkrecht zur Befestigungsseite hin einen ersten Haken 42 sowie rechts und links von diesem je einen zweiten Haken 44.

Aus der Querschnittsansicht in Fig. 5 ist zu entnehmen, dass der zweite Haken 44 so bemessen ist, dass er eine Stromschiene 1 mit einfacher Dicke von oben her haltend hintergreift. Der erste Haken 42 hat in diesem Fall einer Stromschiene einfacher Dicke keine Funktion.

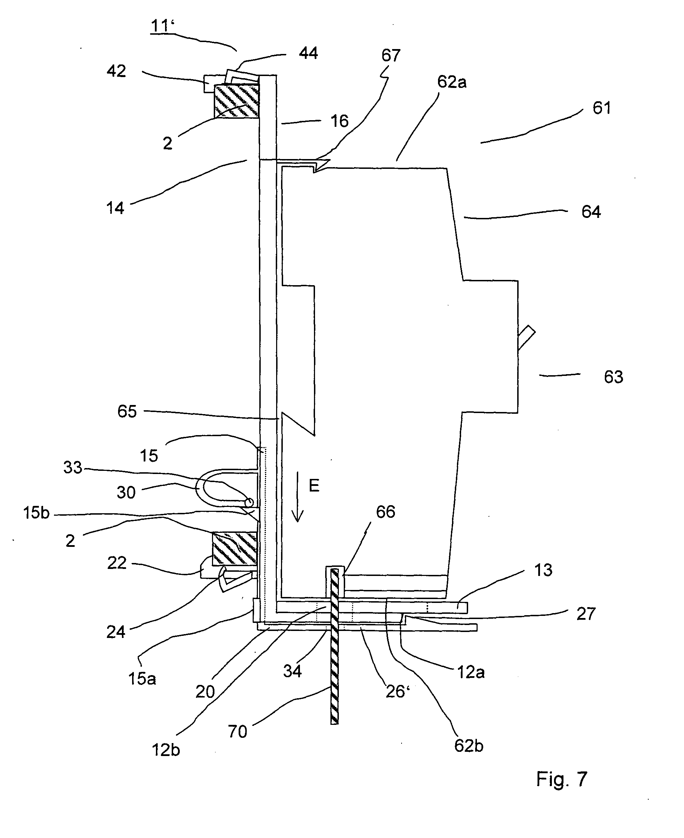

In der Querschnittsansicht der Fig. 7 ist dargestellt, dass der erste Haken 42 so bemessen ist, dass er eine Stromschiene 2 mit doppelter Dicke haltend hintergreift. Der zweite Haken 44 wird in diesem Fall einer Stromschiene 2 mit doppelter Dicke von der Stromschiene weggedrückt, hier nach oben. Um das Einhängen auf die Stromschiene 2 doppelter Dicke zu erleichtern, ist der erste Haken 42 mit einer Einführschräge 42a versehen.

In der Fig. 1 ist weiterhin ein erfindungsgemäßes erstes Befestigungselement 20 dargestellt, wie es mit dem Zwischenteil 11 verwendet wird. Das erste Befestigungselement 20 umfasst als Grundkörper eine rechteckige Platte 21, an der rechtwinklig ein ebenfalls plattenförmiger, langgestreckter Hebel 26 angebracht ist, dessen Länge so gewählt ist, dass er mit seinem freien Ende 26a in die oben erwähnte Ausnehmung 13 hineinragt.

An der Befestigungsseite 14 des Zwischenteils 11 ist mittig und zur unteren Schmalseite 19 hin offen eine rechteckige Ausnehmung zur Führung eingebracht. Diese ist so bemessen, dass die Platte 21 des ersten Befestigungselements 20 in Pfeilrichtung P in diese Ausnehmung eingeführt werden kann und darin längsverschieblich gehalten ist. Um ein Ausbrechen des ersten Befestigungselements 20 aus der Befestigungsebene 14 heraus zu verhindern, sind außen an der Befestigungsseite 14 im Bereich der unteren Schmalseite 19 an beiden Längsseiten der Ausnehmung 15 zwei plattenförmige Führungskörper 15a angebracht, die zumindest teilweise die Ausnehmung 15 überkragend überdecken und so eine sichere Führung des ersten Befestigungsteils 20 in der Ausnehmung 15 gewährleisten.

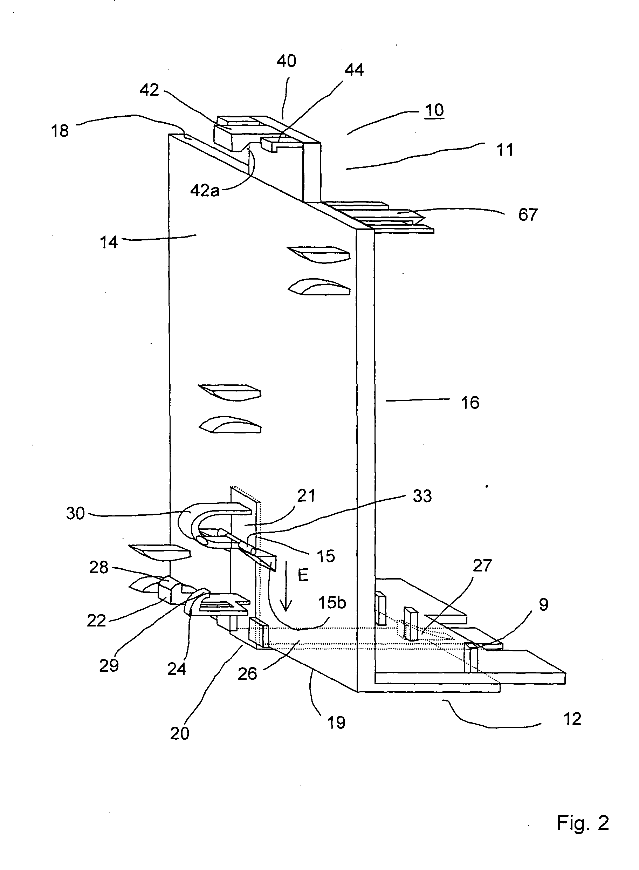

Fig. 2 zeigt die Darstellung des Zwischenteils 11 zusammen mit dem in der Aussparung 15 geführten ersten Befestigungselement 20. Das erste Befestigungselement 20 ist so in die Aussparung 15 eingesetzt, dass der Hebel 26 in Richtung der Geräteseite 16 des Zwischenteils 11 weist. Entsprechend soll diejenige Seite des ersten Befestigungselements 20, an der der Hebel 26 angebracht ist, als Geräteseite des ersten Befestigungselements 20 und die gegenüberliegende Seite als die Befestigungsseite des ersten Befestigungselements bezeichnet werden.

Im unteren Drittel des ersten Befestigungselements 20 sind zwei Halteteile in Form einer ersten und zweiten Raste 22, 24 angebracht. Die erste Raste 22 ist am freien Ende eines ersten Balkens 23 angebracht, der mit seinem festen Ende mit dem ersten Befestigungselement 20 an dessen Befestigungsseite verbunden ist und senkrecht auf der Befestigungsseite steht.

Die zweite Raste 24 ist am freien Ende eines zweiten Balkens 25 angebracht, dessen festes Ende mit dem ersten Balken 23 verbunden ist, derart dass der erste und zweite Balken nebeneinander und in einem geringen Abstand voneinander verlaufen.

Aus der Querschnittsansicht in Fig. 5 ist zu entnehmen, dass die zweite Raste 24 und der zweite Balken 25 so bemessen sind, dass die zweite Raste 24 eine Stromschiene 1 mit einfacher Dicke von unten her haltend hintergreift. Die erste Raste 22 hat in diesem Fall einer Stromschiene einfacher Dicke keine Funktion.

In der Querschnittsansicht der Fig. 7 ist dargestellt, dass die zweite Raste 24 und der zweite Balken 23 so bemessen sind, dass die zweite Raste 24 eine Stromschiene 2 mit doppelter Dicke von unten her haltend hintergreift. Die zweite Raste 24 wird in diesem Fall einer Stromschiene 2 mit doppelter Dicke von der Stromschiene weggedrückt, hier nach unten.

Um das Verrasten der ersten und zweiten Raste 22, 24 mit den Stromschienen zu erleichtern, sind an der ersten bzw. zweiten Raste jeweils Schrägflächen 28, 29 angebracht. Wie oben bereits beschrieben, wird bei der Montage des Zwischenteils auf den Stromschienen eines Verteilers das Zwischenteil 11 mit den Haken 42 oder 44 des zweiten Befestigungselements 40 an der obersten Stromschiene des Verteilerkastens zunächst eingehängt, derart dass es mit den Rasten 22 bzw. 24 auf der entsprechenden anderen Stromschiene vorerst nur aufliegt und ohne großen Kraftaufwand im Verteiler seitlich verschoben werden kann, bis die vorgesehene Einbauposition genau erreicht ist. Dann wird das Zwischenteil in Richtung der Befestigungsseite an die Stromschienen angedrückt. Dabei verrasten die erste bzw. zweite Raste 22, 24 - je nach Stromschienendicke, s.o. - von unten her mit der Stromschiene, was durch die erwähnten Schrägflächen 28, 29 sehr erleichtert wird.

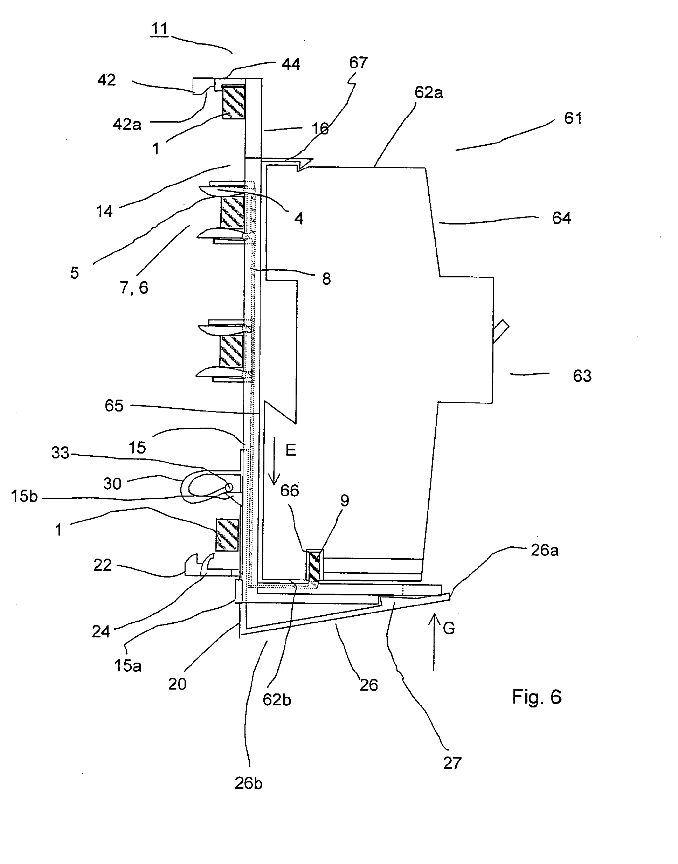

Um das Zwischenteil 11 wieder von den Stromschienen zu entfernen, wird das erste Befestigungselement 20 in einer Entriegelungsrichtung E, senkrecht zu der oder den Stromschienen 1, 2 so weit nach unten zurückgedrückt, bis die erste und/oder zweite Raste 22, 24 von der Stromschiene hinreichend weit zurückgedrückt sind, derart, dass das Zwischenteil 11 nun durch Verkippen nach vorne oben wieder von der Stromschiene gelöst werden kann, siehe Fig. 6.

Zum Zurückdrücken des ersten Befestigungselements 20 wird dabei durch manuelle Betätigung der Hebel 26 an seinem freien Ende 26a nach oben in die durch den Richtungspfeil G angezeigte Richtung gedrückt. Dabei dreht der Hebel 26 sich um eine Lagerstelle 27. Das feste Ende 26b des Hebels 26 wird dadurch in die durch den Richtungspfeil E angezeigte Entriegelungsrichtung, also in Einbaulage nach unten, gedrückt und nimmt dabei das erste Befestigungselement 20 in die Entriegelungsrichtung mit.

Der Hebel 26 ist, wie in Fig. 2, 5 und 6 zu sehen, dabei so lang ausgeführt, dass er, auch wenn an dem Zwischenteil 11 auf dem Sitz 12 ein Installationsschaltgerät 61 eingebaut ist, sich dennoch ohne Werkzeug, rein manuell, von der Frontseite 63 des Installationsschaltgerätes 61 her betätigen und damit das erste Befestigungselement 20 zurückdrücken lässt. Erleichtert wird dies durch die oben bereits erwähnte Ausnehmung 13 in dem Sitz 12, in die der Hebel hineinragt.

Im oberen Drittel des plattenförmigen Teils 21 des ersten Befestigungselementes 20 ist eine im Wesentlichen aus einem U-förmig gebogenem, biegeelastischen Streifen bestehende Biegefeder 30 mit ihrem festen Ende 31 angebracht, derart, dass das freie Ende 32 der Biegefeder 30 unterhalb des festen Endes 31 nahe dem plattenförmigen Teil 21 des ersten Befestigungselementes sich befindet. Die U-Form der Biegefeder 30 ist somit zur Befestigungsseite 14 hin offen. An diesem freien Ende 32 der Biegefeder 30 ist ein zylinderförmiger Ansatz 33 angebracht, derart, dass dieser das plattenförmige Teil 21 des ersten Befestigungselements 20 quer zur dessen Längserstreckungsrichtung beidseitig überragt.

Die Funktion der Biegefeder 30 wird in den Fig.5 und 6 verdeutlicht. Fig. 5 zeigt im Querschnitt das Zwischenteil 11 mit dem ersten Befestigungselement 20 geführt in der Ausnehmung 15. An der Befestigungsseite 14 des Zwischenteils 11 sind in Höhe des freien Endes 32 der Biegefeder 30 beidseitig zur Ausnehmung 15 keilförmige Auflageteile 15b senkrecht zur Befestigungsseite 14 angebracht, derart, dass sich die Biegefeder 30 mit ihrem zylinderförmigen Ansatz 33 darauf abstützt. Dadurch wird erreicht, dass das erste Befestigungselement 20 entgegen der Entriegelungsrichtung E dauernd federnd beaufschlagt ist.

Wenn also das erste Befestigungselement 20 durch Betätigung des Hebels 26 in Entriegelungsrichtung E manuell zurückgedrückt wurde, so wird es nach einem Loslassen des Hebels 26 durch die rückstellende Federkraft der Biegefeder 30 wieder entgegen der Entriegelungsrichtung in seine Ausgangsstellung zurückbewegt. Die Fig. 5 und 6 verdeutlichen dies.

Auf dem Hebel 26 ist in einem Abstand, der dem Abstand entspricht, den die Raststufe 12a an dem Sitz 12 von der Befestigungsseite 14 des Zwischenteils 11 einnimmt, eine Lagerstelle 27 in Form einer erhabenen, etwa dreiecksförmigen Rastnase angebracht.

Diese Lagerstelle 27 stützt sich auf die Raststufe 12a und um diese Lagerstelle 27 dreht sich der Hebel 26, wenn sein freies Ende 26a in Einbaulage nach oben in Richtung des Richtungspfeils G gedrückt wird. Das feste Ende 26b des Hebels 26 wird dadurch in die durch den Richtungspfeil E angezeigte Entriegelungsrichtung, also in Einbaulage nach unten, gedrückt und nimmt dabei das erste Befestigungselement 20 in die Entriegelungsrichtung mit.

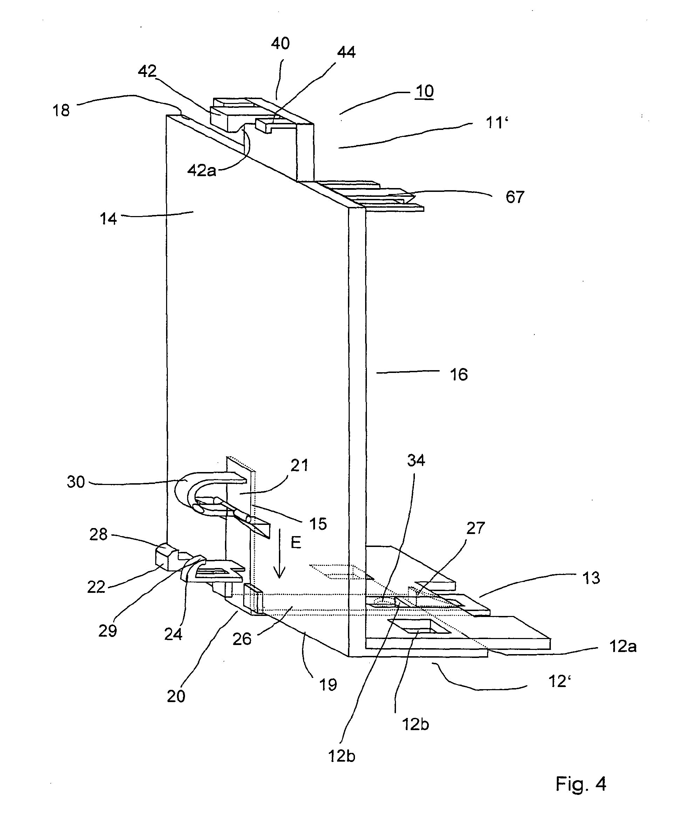

In den hier beschriebenen Ausführungsbeispielen ist das erste Befestigungselement 20 mit dem Hebel 26, der Biegefeder 30 und den Rasten 22, 24 sowie den ersten und zweiten Hebel 23, 25 ein Spritzgussteil aus einem isolierenden Kunststoff, beispielsweise einem Thermoplast. Oben wurde bereits erwähnt, dass auch das Zwischenteil in den hier gezeigten Beispielen der Fig. 1 bis 7 ein Spritzgussteil ist. Dies kann bedingen, dass aufgrund der nötigen Kompatibilität mit dem Spritzgussprozess konstruktive Modifikationen der in den Fig. 1 bis 7 gezeigten Teile vorgenommen werden müssen, ohne dass sich die erfindungsgemäße Funktionalität ändert. Selbstverständlich sollen alle konstruktiven Modifikationen von Teilen, die zwar - bedingt durch den Herstellungsprozess - erforderlich sind, aber die Funktionalität der Teile wie hier beschrieben nicht beeinflussen, von der Erfindung mit erfasst sein.

Bei dem in den Fig. 1,2,5 und 7 gezeigten Ausführungsbeispiel weist das Zwischenteil 11 für jeden Pol eines auf dem Sitz 12 anzubringenden Installationsschaltgerätes 61 einen Steckkontakt 9 sowie einen an jeweils einer Stromschiene 1, 2 anzubringenden Klemmkontakt 7 auf, von dem je ein Leiter 8 zu dem jeweiligen Steckkontakt 9 führt. Der Klemmkontakt 7 tritt an der Befestigungsseite 14 aus dem Zwischenteil 11 hervor. Der Leiter 8 ist beispielsweise ein Blechstreifen, der in eine entsprechende Nut in der Geräteseite 16 des Zwischenteils 11 eingelegt und an der Unterseite des Zwischenteils 11 umgebogen ist, derart, dass er in einer entsprechenden Nut oder Aussparung des Sitzes fortgeführt ist, bis er den Steckkontaktkontaktstift 9 trifft, mit dem er leitend verbunden ist. Klemmkontakt 7, Leiter 8 und Steckkontakt 9 können auch einteilig ausgeführt sein, oder zumindest Leiter 8 und Steckkontakt 9 können einteilig ausgeführt sein.

Der Steckkontakt 9 weist senkrecht nach oben aus dem Sitz 12 heraus, derart, dass er bei Anbringen eines Installationsschaltgerätes an dem Zwischenteil in eine entsprechend angeordnete Anschlussklemme 66 des Installationsschaltgerätes eingreift und dort leitend angeschlossen werden kann.

Die Länge des Leiters 8 und die Lage jedes Klemmkontaktes 7 an der Befestigungsseite 14 des Zwischenteils 11 sind so bemessen, dass jeder Klemmkontakt 7 genau diejenige Stromschiene oder denjenigen Phasenleiter kontaktiert, der dem an dem ihm zugeordneten Steckkontakt 9 kontaktierten Installationsschaltgerät zugeordnet ist.

Wie in Fig. 5 und Fig. 6 genauer zu sehen ist, umfasst jeder Klemmkontakt 7 eine federnd auf die Stromschiene 1, 2 greifende Klammer 6, welche zwei sich gegenüberstehende Schenkel 4 aufweist. Die Schenkel 4 sind an ihrer der Stromschiene 1, 2 zugewandten Kontaktfläche 5 konvex ausgeformt, derart, dass die Kontaktfläche durch eine radienbehaftete, abgerundete Fläche gebildet ist. Diese Ausgestaltung hat den Vorteil, dass bei dem oben bereits beschriebenen Montagevorgang, wenn das Zwischenteil aus der schräg nach vorne gekippten Ausgangsposition an den übrigen Stromschienen verrastet wird, die Klemmkontakte 7 entlang der konvex geformten Kontaktfläche 5 an den Stromschienen 1,2 entlang in ihre Endposition gleiten, wodurch die dazu nötige Montagekraft zur Herstellung der elektrischen Verbindung an den Klemmkontakten 7 reduziert ist.

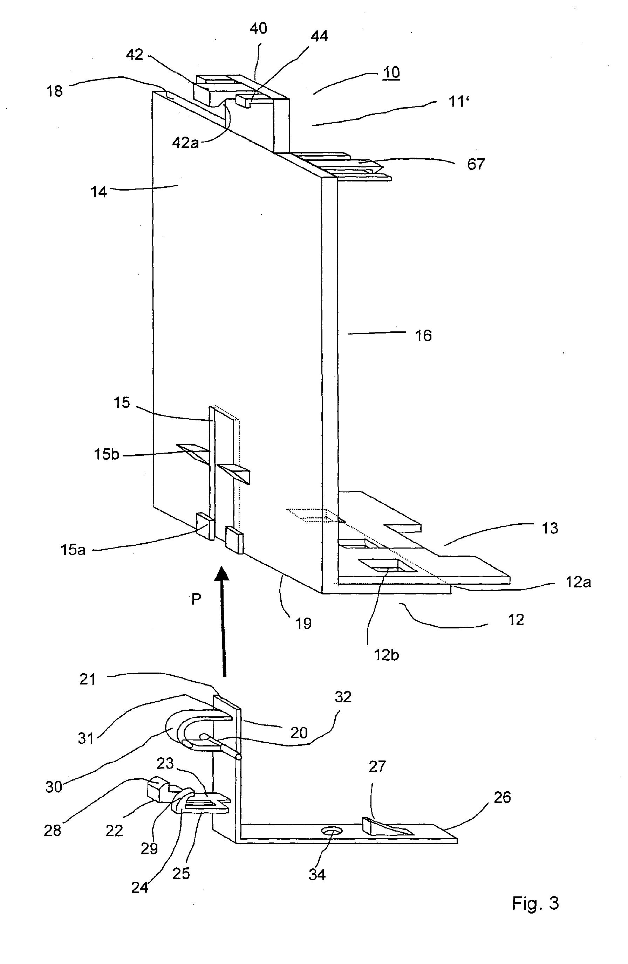

Die Figuren 3, 4 und 7 zeigen eine weitere mögliche Ausführungsform für ein erfindungsgemäßes Zwischenteil. Das dort gezeigte Zwischenteil 11' ist vorgesehen für Installationsschaltgeräte, die durch das Zwischenteil nur mechanisch in einem Verteiler gehalten werden sollen, deren elektrische Kontaktierung jedoch über externe Anschlussleiter 70 direkt in die Anschlussklemmen 66 der oder des Installationsschaltgerätes 61 erfolgen soll und nicht durch Abgriff von Stromsammelschienen im Verteiler. Entsprechend können die Schienen 2' in Fig. 7 entweder Stromsammelschienen oder einfache Profilschienen sein.

Das Zwischenteil 11' entspricht im Wesentlichen dem Zwischenteil 11 aus den Fig. 1 und 2, allerdings fehlen die Klemmkontakte, Leiter und Steckkontakte. Stattdessen sind in dem Sitz 12 Aussparungen 12b eingebracht, derart, dass diese bei Einsetzen eines Installationsschaltgerätes 61 in das Zwischenteil 11' unter den entsprechenden Anschlussklemmen 66 des Installationsschaltgerätes 61 zu liegen kommen, siehe insbesondere Fig. 5. Durch die Aussparungen 12b können elektrische Anschlussleiter 70 in die Anschlussklemmen 66 eingeführt und dort auf herkömmliche Art befestigt werden, beispielsweise durch Schraubklemmen.

Auch in dem Hebel 26'des ersten Befestigungselements 20', das mit dem Zwischenteil 11' verwendet wird, ist eine Aussparung 34 eingebracht, derart, dass sie nach Anbringen des ersten Befestigungselements 20' an dem Zwischenteil 11' unter eine entsprechende Aussparung 12b im Zwischenteil 12' und eine entsprechende Anschlussklemme 66 im Installationsschaltgerät 61 zu liegen kommt. Der Anschlussleiter kann zur Verdrahtung dann durch die Aussparung 34 im Hebel 26', die Aussparung 12b im Sitz 12' in die Anschlussklemme 66 des Installationsschaltgerätes 61 eingeführt werden, siehe Fig. 7.

Selbstverständlich können an dem Installationsschaltgerät 61 auch an dessen oberer Schmalseite 62 elektrische Anschlussleiter auf herkömmliche, bekannte Weise in Anschlussklemmen angebracht werden; dies ist allerdings aus Gründen der Klarheit in den Figuren 1 bis 8 der vorliegenden Erfindung nicht dargestellt.

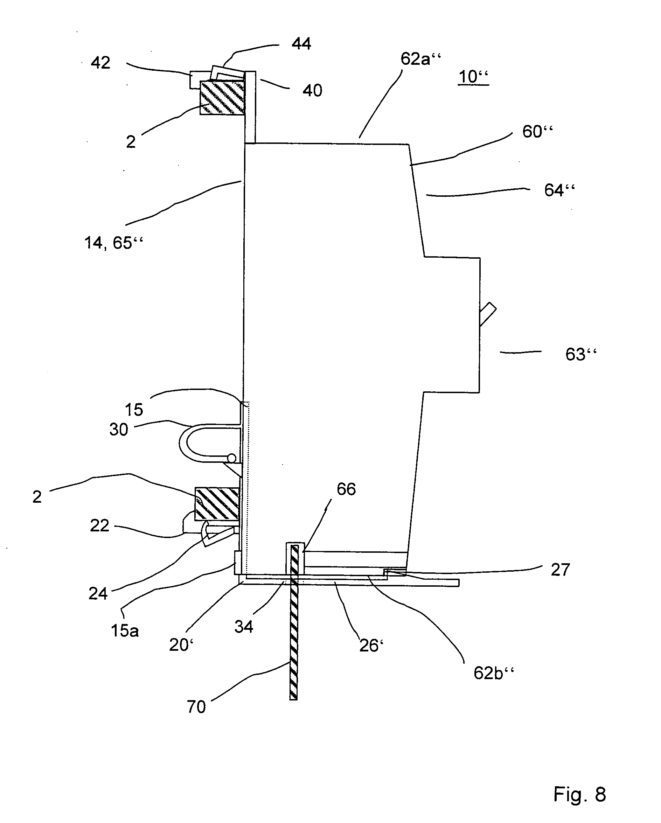

Eine dritte mögliche Ausführungsform der Erfindung ist in Fig. 8 dargestellt. Hier ist das erfindungsgemäße Teil 10" kein Zwischenteil zur Aufnahme eines Installationsschaltgerätes, sondern das Installationsschaltgerät selbst in einem Isolierstoffgehäuse 60, mit einer vorderen Frontseite 63", einer hinteren Frontseite 64", einer oberen und unteren Schmalseite 62a", 62b", und einer Gerätebefestigungsseite 65". Ansonsten bezeichnen gleiche Bezugsziffern gleiche Teile wie in den Fig. 1 bis 7.

Das zweite Befestigungselement 40 mit dem ersten und den zweiten Haken 42, 44 ist in Verlängerung der Gerätebefestigungsseite 65" an der Schmalseite, die in montiertem Zustand oben liegt, direkt an dem Isolierstoffgehäuse 60 angebracht. Die Befestigungsseite 14 des Teils 10" ist in dieser Ausführungsform identisch mit der Gerätebefestigungsseite 65".

Die Führungsausnehmung 15 ist in die Gerätebefestigungsseite 65" im Bereich der "unteren Schmalseite" eingebracht. Das erste Befestigungselement 20' entspricht in Aufbau, Anbau am Teil 10" und Funktion demjenigen aus dem oben beschriebenen zweiten Ausführungsbeispiel. Insbesondere weist es also in dem Hebel 26', eine Aussparung 34 auf, durch die hindurch ein Anschlussleiter 70 in die Anschlussklemme 66" des Installationsschaltgerätes eingeführt und werden kann. Der Hebel 26' überragt dabei die hintere Gerätefrontseite.

Der besondere Vorteil der dritten Ausführungsform liegt darin, dass - bei entsprechender konstruktiver Gestaltung des Isolierstoffgehäuses 60 des Installationsschaltgerätes - ein Bauteil weniger zur Montage eines Installationsschaltgerätes in einem Verteiler bei gleichzeitiger Beibehaltung der durch das erste und zweite Befestigungselement gegebenen und oben beschriebenen Montagevorteile benötigt wird.

Das zweite Befestigungselement 40 kann auch an das Installationsschaltgerät 60" angerastet sein.

Die in den drei Ausführungsbeispielen beschriebenen Teile, Zwischenteile und Befestigungselemente bestehen vorteilhafterweise aus einem Kunststoffmaterial, beispielsweise einem Thermoplast, und werden mittels Spritzgusstechnik hergestellt. Sie sind selbstverständlich so konstruiert, dass sie die einschlägigen Normen und Richtlinien im Bereich der elektrischen Installationstechnik erfüllen. Aber auch erfindungsgemäße Teile, Zwischenteile und Befestigungselemente, die aus anderen dem Fachmann bekannten und geeigneten Materialien und nach anderen Herstellungsmethoden gefertigt werden, sind von der Erfindung erfasst. Ebenso sind selbstverständlich auch Teile erfasst, die Zwischenteile für einpolige Installationsschaltgeräte oder einpolige Installationsschaltgeräte selbst sind.

## Patentansprüche

1. Auf Trägerelementen, insbesondere Stromschienen (1, 2) oder Normprofilschienen, einer elektrischen Einrichtung, insbesondere eines Verteilers, anzuordnendes Teil (10), insbesondere Installationsschaltgerät oder Zwischenteil zum Anordnen eines Installationsschaltgerätes auf den Stromschienen (1, 2) eines Verteilers, mit wenigstens einem hinter eine der Stromschienen greifenden ersten Befestigungselement (20) an seiner Befestigungsseite, **dadurch gekennzeichnet, dass** das erste Befestigungselement (20), mit zwei in zwei Stufen angeordneten Halteteilen (22, 24) versehen ist, derart, dass das zweite Halteteil (24) zurückdrückbar ist und durch das Zurückdrücken des zweiten (24) und Benutzen des ersten Halteteils (22) eine Anpassung an eine Stromschiene (2) von mehrfacher, insbesondere doppelter Dicke möglich wird, und wobei beide Halteteile (22, 24) zusammen sich durch einen von der Gerätefrontseite (63, 64) her manuell betätigbaren Hebel (26) zurückdrücken lassen.

2. Teil nach Anspruch 1, **dadurch gekennzeichnet, dass** das erste Halteteil (22) eine Raste ist, die von der Befestigungsseite des Teils einen Abstand einer mehrfachen, insbesondere doppelten Stromschienendicke aufweist und dass das zweite Halteteil (24) eine Raste ist, die von der Befestigungsseite des Teils einen Abstand einer einfachen Stromschienendicke aufweist.

3. Teil nach Anspruch 2, **dadurch gekennzeichnet, dass** das Teil (10) ein an seiner Ober- oder Unterseite (18, 19) angebrachtes zweites Befestigungselement (40) mit wenigstens zwei in zwei Stufen angeordneten Haken (42, 44) aufweist, derart, dass der zweite Haken (44) zurückdrückbar ist und durch das Zurückdrücken des zweiten und Benutzen des ersten Hakens eine Anpassung an eine Stromschiene (2) von mehrfacher, insbesondere doppelter Dicke möglich wird.

4. Teil nach Anspruch 3, **dadurch gekennzeichnet, dass** ein erster Haken (42) und zwei zweite Haken (44) an dem zweiten Befestigungselement (40) angebracht sind.

5. Teil nach Anspruch 3, **dadurch gekennzeichnet, dass** der erste Haken (42) von der Befestigungsseite des Teils einen Abstand einer mehrfachen, insbesondere doppelten Stromschienendicke, und der zweite Haken (44) von der Befestigungsseite des Teils einen Abstand einer einfachen Stromschienendicke aufweist.

6. Teil nach Anspruch 2, **dadurch gekennzeichnet, dass** der Hebel (26) mit dem ersten Befestigungselement (20) verbunden und das erste Befestigungselement (20) in eine Entriegelungsrichtung E zurückdrückbar ist, derart, dass mit dem Zurückdrücken des ersten Befestigungselements (20) die erste und zweite Raste (22, 24) zurückgedrückt werden.

7. Teil nach Anspruch 6, **dadurch gekennzeichnet, dass** der Hebel (26) so angeordnet ist, dass er sich bei eingebautem Installationsschaltgerät (61) längs einer Schmalseite (62) des Installationsschaltgerätes (61) befindet.

8. Teil nach Anspruch 7, **dadurch gekennzeichnet, dass** die erste Raste (22) am freien Ende eines ersten Balkens (23) angebracht ist, dessen festes Ende mit dem ersten Befestigungselement (20) verbunden ist.

9. Teil nach Anspruch 8, **dadurch gekennzeichnet, dass** die zweite Raste (24) am freien Ende eines biegbaren zweiten Balkens (25) angebracht ist, dessen festes Ende mit dem ersten Befestigungselement (20) oder dem ersten Balken (23) verbunden ist.

10. Teil nach Anspruch 9, **dadurch gekennzeichnet, dass** an der ersten und/oder zweiten Raste (22, 24) eine Schrägfläche (28, 29) zum Zurückdrücken der Raste (22, 24) ausgebildet ist.

11. Teil nach Anspruch 10, **dadurch gekennzeichnet, dass** das erste Befestigungselement (20) einen plattenförmigen Körper (21) umfasst und an der Befestigungsseite (14) des Teils (10) in einer Führung (15) längsverschieblich gehalten ist.

12. Teil nach Anspruch 11, **dadurch gekennzeichnet, dass** das erste Befestigungselement (20) entgegen der Entriegelungsrichtung E dauernd federnd beaufschlagt ist.

13. Teil nach Anspruch 12, **dadurch gekennzeichnet, dass** das erste Befestigungselement (20) durch eine Biegefeder (30) federnd beaufschlagt ist, deren eines, festes Ende (31) an dem ersten Befestigungselement (20) angebracht und deren zweites, freies Ende (32) sich an der Befestigungsseite (14) des Teils (10) abstützt.

14. Teil nach Anspruch 13, **dadurch gekennzeichnet, dass** der Hebel (26) eine Aussparung (34) aufweist, derart, dass durch die Aussparung (34) Anschlussleiter (70) zu Anschlussklemmen (66) des Installationsschaltgerätes (60, 61) geführt werden können.

15. Teil nach einem der Ansprüche 1 bis 14, **dadurch gekennzeichnet, dass** das Teil (10) einen Sitz (12) für ein Installationsschaltgerät (61) aufweist.

16. Teil nach Anspruch 15, **dadurch gekennzeichnet, dass** der Hebel (26) zwischen seinem freien Ende (26a) und seinem festen Ende (26b) eine Lagerstelle (27) aufweist, um die der Hebel 26 drehbar ist.

17. Teil nach Anspruch 16, **dadurch gekennzeichnet, dass** bei manueller Betätigung des Hebels 26 an seinem freien Ende 26a nach oben dieser sich um die Lagerstelle 27 derart dreht, dass das feste Ende 26b des Hebels 26 in Entriegelungsrichtung nach unten gedrückt und das erste Befestigungselement 20 in die Entriegelungsrichtung mitgenommen wird.

18. Teil nach einem der vorhergehenden Ansprüche, **dadurch gekennzeichnet, dass** das Teil (10) für jeden Pol des Installationsschaltgerätes (60, 61) einen Steckkontakt (9) sowie einen an jeweils einer Stromschiene (1, 2) anzubringenden Klemmkontakt (7), von dem ein Leiter (8) zu dem Steckkontakt (9) führt, aufweist.

19. Teil nach Anspruch 18, **dadurch gekennzeichnet, dass** der Klemmkontakt (7) eine federnd auf die Stromschiene (1, 2) greifende Klammer (6) umfasst, welche zwei sich gegenüberstehende, wenigstens an der der Stromschiene (1, 2) zugewandten Kontaktfläche (5) einen konvexen Querschnitt aufweisende Schenkel (4) aufweist.
